# EUROPÄISCHE PATENTSCHRIFT

(11) **EP 2 014 492 B1**
(45) Veröffentlichungstag und Bekanntmachung des Hinweises auf die Patenterteilung: **23.09.2015**
(21) Anmeldenummer: 08007260.6
(22) Anmeldetag: 12.04.2008
(51) Int. Cl.: B60J 1/20

(54) **Hebelrollo mit Anschlagdämpfer**
Lever-operated roller blind with impact dampener
Store à levier doté d'un amortisseur de butée

(30) Priorität: 10.07.2007 DE 102007032435
(43) Veröffentlichungstag der Anmeldung: 14.01.2009
(73) Patentinhaber: BOS GmbH & Co. KG, 73760 Ostfildern (DE)
(72) Erfinder: Bühl, Olaf, 73095 Albershausen (DE); Weinbrenner, Harry, 72644 Oberboihingen (DE)
(74) Vertreter: Rüger, Barthelt & Abel

(56) Entgegenhaltungen:
- WO-A-02/38404
- GB-A- 580 217
- GB-A- 2 278 141
- JP-A- H11 336 820
- US-A- 5 752 560
- US-A1- 2003 066 615

## Beschreibung

Die WO 02/38404 A1 beschreibt ein Hebelrollo für Kraftfahrzeuge. Das Rollo soll dazu verwendet werden, die Sonneneinstrahlung durch die Heckscheibe zu vermindern, um ein zu schnelles Aufheizen des Innenraums zu verhindern. Außerdem reduziert das ausgefahrene Rollo bei starker Sonneneinstrahlung die Anforderungen an die Klimaanlagenleistung.

Das bekannte Rollo weist eine in einem Rollogehäuse drehbar gelagerte Wickelwelle auf. An dem Gehäuse sind längs der Wickelwelle beabstandet zwei zweiarmige Hebel anscharniert. Die Drehachse der Hebel liegt rechtwinklig zu der Längsachse der Wickelwelle. An dem freien Ende der längeren der beiden Arme sitzen Gleitsteine, die in einer Führungsnut des Zugstabs gleiten, an dem die Rollobahn befestigt ist. Die andere Kante der Rollobahn ist an der Wickelwelle verankert.

Zum Bewegen der Rollobahn und um diese gespannt zu halten, sitzt sie im Inneren der Wickelwelle ein Federmotor. Zum kraftbetriebenen Ausfahren der Rollobahn gegen die Wirkung des Federmotors ist ein Getriebemotor vorgesehen, an dem Kurbeln angebracht sind, die über Stangen mit dem kurzen Arm jedes der beiden zweiarmigen Hebel verbunden sind.

Wenn der Getriebemotor mit der entsprechenden Drehrichtung in Gang gesetzt wird, werden die zweiarmigen Hebel aus der Ruhelage, in der sie etwa parallel zur Wickelwelle liegen, in die aufgerichtete Stellung überführt. Hierbei spannen sie die Rollobahn auf und tragen auch den Zugstab während der Aufspannbewegung. Zur Unterstützung befinden sich am oberen Ende der Heckscheibe eine Gruppe von zwei Aufnahmenuten, in die der Zugstab einfährt, damit die Erschütterungen in Verbindung mit der Elastizität der zweiarmigen Hebel nicht dazu führen, dass der Zugstab gegen die Scheibe anschlagen kann.

Die Ruhelage der Hebel wird durch ortsfest Anschläge definiert, gegen die die Hebel laufen und die eine weitere Bewegung blockieren, obwohl der Getriebemotor im Sinne einer Einfahrbewegung eingeschaltet bleibt.

Maßnahmen, die Hebelbewegung zu verlangsamen bevor ihre Bewegung blockiert wird, sind nicht vorgesehen. Dementsprechend hart ist der Aufschlag, wenn der Zugstab oder die Hebel an dem Gehäuse auftreffen.

Es ist ferner bekannt anstelle der zweiarmigen Hebel jeweils zwei Kniehebelanordnungen zu verwenden, von denen jeder mit ihren freien Enden einerseits am Gehäuse der Wickelwelle und andererseits an dem Zugstab anscharniert ist. Die Achsen dieser Scharniere sowie des Kniegelenks, das die Kniehebelarme miteinander verbindet, sind achsparallel und rechtwinklig zur Wickelwelle.

Auch hier wird keine Steuerung verwendet, um die Bewegungsgeschwindigkeit der Kniehebelanordnungen zu verlangsamen, wenn sich der Zugstab in der eingefahrenen Endstellung nähert, die durch mechanische Anschläge definiert ist.

Die GB 580,217 A zeigt ein Heckfensterrollo mit einem nachgiebigen Anschlag zur Vermeidung eines Festsetzens oder Verklemmens der Schwenkhebelanordnung des Heckfensterrollos. Die US 5 752 560 A zeigt ein Rollo für Kraftfahrzeuge mit einer Schwenkhebelanordnung an deren oberen Ende ein Stab angeordnet ist, an dem das ausziehbare Rollo befestigt ist. An den beiden Enden des Stabes sind Räder aus Gummi angeordnet, die eine Beschädigung der Autoscheibe für den Fall verhindern sollen, dass sich die Schwenkhebelanordnung zurückbewegt.

Aus der JP 11-336820 A ist ein Federelement bekannt, das durch ein verformbares Kammerprofil gebildet ist. Ausgehend von einer mit einem Befestigungsfuß versehenen Basis erstreckt sich eine Steganordnung zu einem Kopfabschnitt. Die Steganordnung legt einen Hohlraum fest, der zwischen dem Kopfabschnitt und der Basis liegt. Außerdem legt die Steganordnung zwei neben dem Kopfabschnitt liegende Hohlräume fest. Die Steganordnung erbringt eine mehrfach geknickte, abschnittsweise degressive und abschnittsweise progressive Federkennlinie.

Ausgehend hiervon ist es Aufgabe der Erfindung, derartige Hebelrollos derart weiter zu bilden, dass Geräusche beim Erreichen der eingefahrenen Endstellung zumindest stark vermindert sind.

Diese Aufgabe wird erfindungsgemäß durch ein Heckscheibenrollo mit den Merkmalen des Anspruches 1 gelöst.

Das neue Heckfensterrollo für Kraftfahrzeuge weist eine Rollobahn auf, die vorzugsweise in ihrem Zuschnitt an die Gestalt des Heckfensters angepasst ist. Es ist eine Wickelwelle vorgesehen, die drehbar gelagert ist und an der mit einer Kante die Rollobahn befestigt ist. Das von der Rollobahn abliegende Ende der Rollobahn ist mit einem Zugstab verbunden.

Eine Vorspanneinrichtung dient dazu, die Rollobahn, unabhängig vom Betriebszustand gespannt zu halten.

In der Nähe der Seitenkanten der Rollobahn sind zwei weitgehend biegesteife Schwenkhebelanordnungen vorgesehen, die bei der Wickelwelle gelagert sind. Die Schwenkachse der Schwenkhebelanordnungen liegt rechtwinklig zu der Achse der Wickelwelle. Sie sind außerdem mit dem Zugstab verbunden und dienen dazu, den Zugstab zumindest beim Überführen des Zugstabs aus der Ruhestellung in die Stellung entsprechend dem maximal aufgespannten Rollo zu tragen und zu führen.

Eine Anschlagbremseinrichtung befindet sich in der Nähe der Wickelwelle im Bewegungsweg der Schwenkhebelanordnungen. Die Anschlagbremseinrichtung ist so gestaltet, dass sie die Bewegung der Schwenkhebelanordnungen bei der Bewegung in die Ruhelage, die dem eingefahrenen Rollo entspricht, verlangsamen. Hierdurch werden harte Aufschlaggeräusche vermieden, wenn der Zugstab die Begrenzung am Bewegungsende erreicht.

Die Anschlagbremseinrichtung kann dabei zusätzlich auch als mechanischer Anschlag dienen, der die Endlage definiert. Insbesondere bei Hebelrollos treten praktisch keine Toleranzprobleme auf, weil der Hebel in der eingefahrenen Stellung praktisch genau horizontal verläuft, so dass Fehljustierungen der Anschlagbremseinrichtung zu keinem Positionsfehler führen, der der Montagetoleranz direkt entspricht, oder dass aufgrund irgendwelcher trigonometrischer Zusammenhänge oder anderer Übersetzungsverhältnisse eine Vergrößerung eintritt.

Die Anschlagbremseinrichtung ist in der Lage, auch bei einem elektrisch angetriebenen Rollo den Elektroantrieb hinreichend zu verzögern. Besondere Steuerungsmaßnahmen um gezielt den Antrieb in der Nähe der Ruhelage zu verlangsamen werden so entbehrlich.

Besonders einfach werden die Verhältnisse, wenn für beide Schwenkhebelanordnungen nur eine einzige Anschlagbremseinrichtung verwendet wird, die für beide gemeinsam wirkt. Sie ist zweckmäßigerweise an jener Stelle angeordnet, an der sich in der Ruhelage die beiden Schwenkhebel kreuzen.

Es ist jedoch auch möglich, für jede Schwenkhebelanordnung eine eigene Anschlagbremseinrichtung zu verwenden, wenn dies aus räumlichen Gründen zweckmäßig ist, beispielsweise, weil sich die Hebel in der eingefahrenen Stellung nicht überschneiden.

Als Anschlagbremseinrichtung wird ein Elastomerteil verwendet. Durch entsprechende Gestaltung des Elastomerteils kann eine progressive Bremskraft erzeugt werden, damit bei zunehmender Verformung die erforderliche Verformungskraft überproportional zum Weg ansteigt.

Das Elastomerteil kann parallel nebeneinander liegende rohrförmige Durchgänge enthalten. Die Durchgänge sind so positioniert, dass die Achsen der Durchlässe oder Durchgänge rechtwinklig zu jener Ebene liegen, längs derer die Schwenkhebelanordnungen laufen.

Eine gute Bremswirkung wird erreicht, indem das Elastomerteil als Anschlagbremseinrichtung zwei halbzylindrische zueinander koaxiale Wände aufweist.

Die halbzylindrischen Wände sind durch Stegwände, die etwa radial verlaufen, miteinander verbunden. Dadurch wird erreicht, dass sich die radial außen liegende Wand zusätzlich auf der radial innen liegenden Wand abstützt, wenn die Verformung der äußeren Wand entsprechend fortgeschritten ist.

Günstige Antriebsverhältnisse ergeben sich, wenn die Vorspanneinrichtung mit der Wickelwelle gekuppelt ist. Die Vorspanneinrichtung kann von einem Federmotor gebildet sein.

Als Schwenkhebelandordnung kann ein durchgehender Hebel vorgesehen sein, der einends in der Nähe der Wickelwelle um eine rechtwinklig zu der Wickelwelle verlaufende Achse schwenkbar gelagert ist und dessen anderes Ende mit dem Zugstab gleitend verbunden ist.

Eine andere Möglichkeit für die Schwenkhebelanordnung besteht in der Verwendung von Kniehebelanordnungen von denen jeweils ein Ende bei der Wickelwelle schwenkbar gelagert ist und das andere am Zugstab. Diese Scharniergelenke sind zueinander achsparallel und auch achsparallel zu dem Kniegelenk, dass die beiden Abschnitte der Kniehebelanordnung miteinander verbindet.

Die elektrische Antriebseinrichtung kann wahlweise mit der Wickelwelle oder der Schwenkhebelanordnung gekoppelt sein.

Als elektrische Antriebseinrichtung kann ein Getriebemotor Verwendung finden.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen die insoweit die Figurenbeschreibung ergänzen. Es ist klar dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" bzw. "vorne" und "unten" beziehen sich auf die normale Einbaulage bzw. die Terminologie bei Kraftfahrzeugen.
- Fig. 1: zeigt eine Rückansicht eines PKW unter Veranschaulichung eines ausgefahrenen Heckscheibenrollos.
- Fig. 2: zeigt eine Rückansicht eines PKW unter Veranschaulichung des eingefahrenen Heckscheibenrollos.
- Fig. 3: zeigt die Anschlagbremseinrichtung des Heckscheibenrollos nach Fig. 1 in einer perspektivischen Darstellung.
- Fig. 4: zeigt eine andere Ausführungsform für das Heckscheibenrollo unter Verwendung von Kniehebelanordnungen.

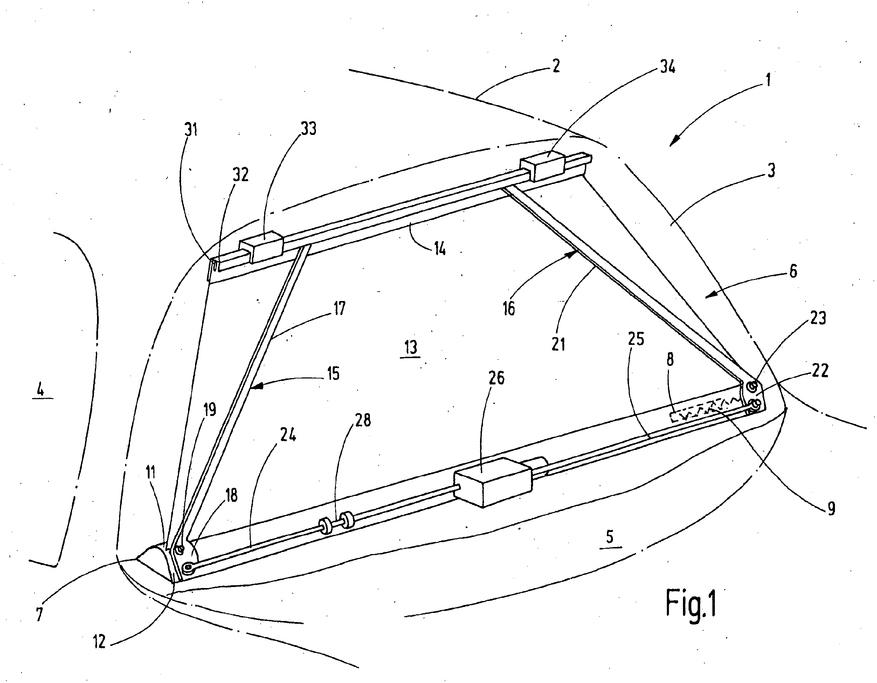

Fig. 1 zeigt eine schematisierte Rückansicht eines PKW 1 mit Stufenheck. Zu erkennen ist ein Dach 2, neben dessen hinteren Ende ein Heckfenster 3 angeordnet ist. Ferner ist auf der linken Seite eine hintere Seitenscheibe 4 zu erkennen. Im Innenraum des PKW 1 vor der Heckscheibe 3 befindet sich eine Hutablage 5, die in bekannter Weise bis zur Rückseite von Rücksitzlehnen reicht. Innerhalb des Fahrgastraumes neben der Heckscheibe 3 befindet sich ein Heckscheiben-rollo 6.

Zu dem Heckscheibenrollo 6 gehört ein Rollogehäuse 7, das wahlweise auf der Hutablage 5 oder unterhalb der Hutablage 5 angeordnet sein kann. Innerhalb des Gehäuses 7, das sich über die gesamte Breite der Hutablage 5 bzw. der Unterkante der Heckscheibe 6 erstreckt, ist eine gestrichelt angedeutete Wickelwelle 8 drehbar gelagert. Der Wickelwelle 8 ist ein Federmotor 9 zugeordnet, der einends mit der Wickelwelle 8 und anderenends mit dem Gehäuse 7 drehfest verbunden ist. Mit Hilfe des Federmotors 9 wird die Wickelwelle 8 in eine Drehrichtung vorgespannt.

Das Gehäuse 7 enthält an seiner Oberseite einen Auszugsschlitz 11, der neben einer nach hinten zeigenden planen Seitenfläche 12 ausgebildet ist und sich über die gesamte Länge des Gehäuses 7 erstreckt.

An der Wickelwelle 8 ist mit einer Kante eine Rollobahn 13 befestigt, deren Zuschnitt etwa trapezförmig gestaltet ist, um die Form des Heckfensters 6 anzunähern.

An der von der Wickelwelle 8 abliegenden Kante ist an der Rollobahn 13 ein Zugstab 14 befestigt. Zum Bewegung des Zugstabs 14 sind zwei Schwenkhebel 15 und 16 vorgesehen, die zueinander spiegelbildlich sind. Beide Schwenkhebel 15, 16 sind zweiarmige biegesteife Hebel mit einem langen Arm 17 und einem kurzen Arm 18. An der Übergangsstelle, dort, wo der lange Arm 17 in den kurzen Arm 18 übergeht, enthält der Schwenkhebel 15 eine Lagerbohrung, durch die ein ortsfester Lagerzapfen 19 hindurch führt, der an dem Gehäuse 7 auf der nach hinten zeigenden Gehäusefläche 12 verankert ist. Der Zapfen 19 verläuft rechtwinklig zu der Längsachse der Wickelwelle 8. Der lange Arm 15 kann sich in einer Ebene bewegen, die parallel zu der Wickelwelle 8 liegt.

Der Schwenkhebel 16 ist ähnlich gestaltet und setzt sich ebenfalls aus einem langen Arm 21 und einem kurzen Arm 22 zusammen. An der Übergangsstelle befindet sich wiederum eine Lagerbohrung, durch die ein ortsfester Lagerzapfen 23 hindurch führt. Der Lagerzapfen 23 ist achsparallel zu dem Lagerzapfen 19. Beide Lagerzapfen 19, 23 befinden sich unmittelbar neben den Stirnenden des Gehäuses 7.

An dem freien Ende der beiden kurzen Arme 18 und 19 greift jeweils eine Zug- oder Koppelstange 24 bzw. 25 an, über die die beiden Schwenkhebel 15, 16, jeder für sich, mit einem Getriebemotor 26 verbunden ist. Der Getriebemotor 26 trägt auf seiner Ausgangswelle zwei diametral gegenüberliegende nicht erkennbare Kurbeln, an denen die jeweiligen Zugstangen 24, 25 enden. Der Getriebemotor 26 befindet sich etwa auf der Mitte der Längserstreckung des Gehäuses 7.

Zur Justage der Lagesymmetrie ist außerdem eine Verstelleinrichtung 28 vorhanden, die im Verlauf der Zugstange 24 liegt.

Die freien Enden der langen Arme 17, 16 sind mit dem Zugstab 14 verbunden. Der Zugstab 14 enthält hierzu zwei nach unten offene nebeneinander liegende Nuten 31 und 32. In jeder der Nuten 31 und 32 gleitet eines der freien Enden der langen Arme 17 bzw. 21 entweder unmittelbar oder über nicht erkennbare Gleiter, wie dies bekannt ist.

Neben der Oberkante des Heckfensters 6 befinden sich noch zwei voneinander beabstandete Haltelemente 33 und 34, die nach unten offene Nuten aufweisen, in die, wie Fig. 1 zeigt, im ausgefahrenen Zustand der Zugstab 14 einläuft.

Die Arbeitsweise des insoweit beschriebenen Rollos 16 ist wie folgt:
Wenn sich das Rollo, wie Fig. 1 zeigt, im ausgefahrenen Zustand befindet, sind die beiden Schwenkhebel 15, 16 mit ihren langen Armen 17, 21 maximal aufgerichtet und drücken den Zugstab 14 in die Aufnahmenuten der voneinander beabstandeten Halter 33 und 34. In dieser Stellung werden die Schwenkhebel 15, 16 durch den Getriebemotor 26 gehalten, der auf die beiden mit ihm gekoppelten Zugstangen 24 und 25 eine entsprechende Zugkraft ausübt.

Wenn der Benutzer das Heckscheibenrollo 6 einfahren möchte, setzt er durch einen entsprechenden Schalter im Kraftfahrzeug den Getriebemotor 26 mit der umgekehrten Drehrichtung in Gang. Die Zugstangen 24 und 25, die jede für sich mit einer entsprechenden Kurbel des Getriebemotors 26 verbunden ist, werden synchron jedoch gegensinnig in Richtung auf das jeweilige Ende des Gehäuses 7 vorgeschoben. Hierdurch wird dem linken Schwenkarm 15 eine Bewegung im Uhrzeigersinne und dem rechten Schwenkarm 16 eine Bewegung im Gegenuhrzeigersinne aufgeprägt. Die freien Enden der beiden langen Arme 17, 21 bewegen sich aufeinander zu und gleichzeitig nach unten in Richtung auf das Gehäuse 7. Hierdurch bekommt der Federmotor 9 die Möglichkeit, entsprechend die Wickelwelle 8 im Sinne des Aufwickelns der Rollobahn 13 auf die Wickewelle 8 in Gang zu setzen. Mit Hilfe des Federmotors 9 wird über den kompletten Weg, unabhängig von der Bewegungsrichtung, die Rollobahn 13 gespannt gehalten.

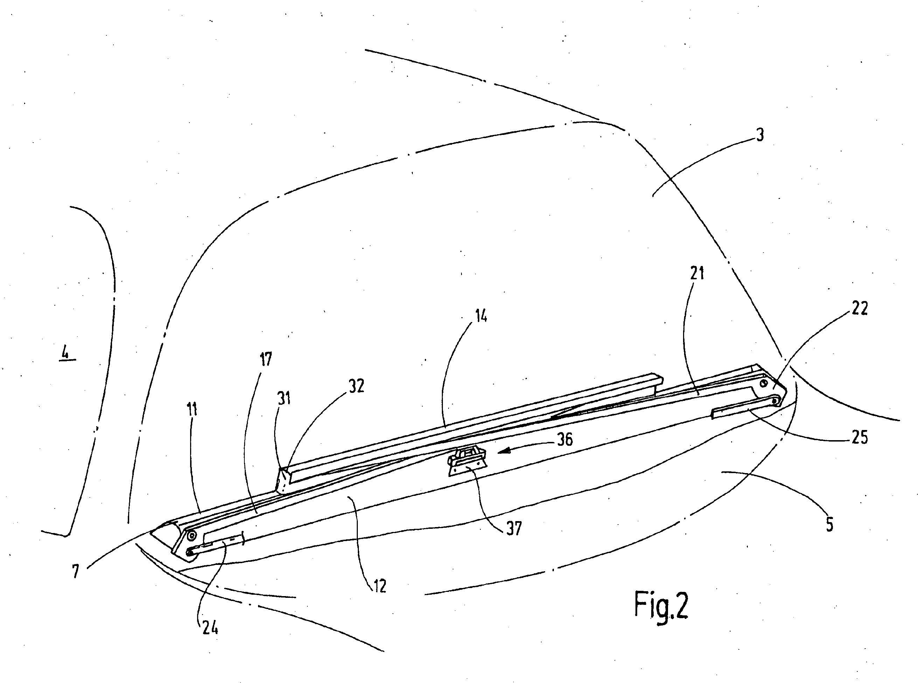

Die freien Enden der beiden langen Arme 17, 21 bewegen sich von den äußeren Enden des Zugstabs 14 in Richtung auf die Mitte. Je nach Proportionen des Heckfensters 6, d.h. den relativen Abmessungen von Höhe zu Breite, werden sie in einer mittleren Stellung des Zugstabs 14 einander begegnen und sodann bei der weiteren Bewegung überkreuzen. Die eingefahrene Endlage veranschaulicht Fig. 2. Am Ende der Einfahrbewegung steht das freie Ende des langen Arms 21 neben dem linken Ende des Zugstabs 14 und der lange Arm 17 neben dem rechten Ende. Etwa in der Mitte des Gehäuses 7 überkreuzen sich die beiden Schwenkhebel 15, 16 mit ihren langen Armen.

Die Schwenkhebel 15, 16 sind hinreichend biegesteif, um auf dem Weg von den Halteelementen 33 und 34 bis hin zum Auslaufschlitz 11, bzw. in der entgegengesetzten Richtung, den Zugstab 14 samt dem daran hängenden Rollobahn zu tragen.

Es bedarf keiner weiteren Erläuterung um zu verstehen, dass das Ausfahren der Rollobahn 13 sinngemäß in der umgekehrten Weise erfolgt, indem mit Hilfe des Getriebemotors 26 die Schwenkhebel 15, 16 aufgerichtet werden.

Um ein lautes Aufschlaggeräusch zu vermeiden, wenn das Rollo 6 seine untere Endlage entsprechend der eingefahrenen Position erreicht, ist eine in Fig. 2 zu erkennende Anschlagbremseinrichtung 36 vorhanden. Diese Anschlagbremseinrichtung 36 ist in Fig. 1 durch den Getriebemotor 26 verdeckt, der in Fig. 2 weggelassen ist.

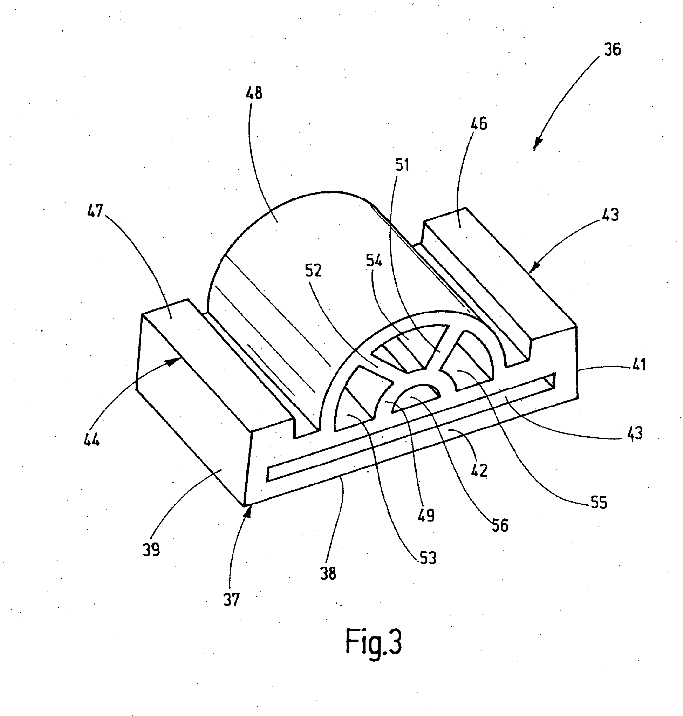

Die Anschlagbremseinrichtung 36 besteht aus einem Elastomerteil, das in Fig. 3 gesondert dargestellt ist. Die Anschlagbremseinrichtung 36 sitzt auf einer Winkelkonsole 37, die an dem Rollogehäuse 7 oder an einer entsprechenden anderen Stelle im Kraftfahrzeug befestigt ist, falls das Heckscheibenrollo 6 ohne Gehäuse 7 sondern nur mit Tragrohr oder Tragkonsole ausgeführt ist. Die Anschlagbremseinrichtung 36 befindet sich an jener Stelle, an der in der eingefahrenen Endstellung des Fensterrollos 6 sich die beiden langen Arme 17 und 21, wie in Fig. 2 zu erkennen ist, überkreuzen.

Bei der Antriebsbremseinrichtung 36 handelt es sich um ein in einem Stück gespritzten Elastomerteil. Das Elastomerteil 36 weist eine etwa rechteckige Sockel- oder Bodenplatte 37 auf, die von einer Unterseite 38 sowie zwei zueinander etwa parallel verlaufenden kurzen Seitenwänden 39 und 41 und zwei ebenfalls zueinander parallel verlaufenden langen Seitenwänden 42 begrenzt ist. Die zur Seitenwand 42 parallele andere lange Seitenwand befindet sich auf der von dem Betrachter abliegenden Seite.

Die Bodenplatte 37 enthält einen sich von der langen Seitenwand 42 bis zur gegenüberliegenden Seitenwand erstreckenden schlitzförmigen Durchgangsöffnung 43 mit rechteckigem Querschnitt. Die schlitzförmige Durchgangsöffnung 43 reicht, wie gezeigt, bis in die Nähe der kurzen Seitenwände 39 und 41. Die schlitzförmige Durchgangsöffnung 43 dient dazu, die Anschlagbremseinrichtung 36 auf einen plattenförmigen Arm der Winkelkonsole 37 aufzustecken und dort zu halten.

Auf der Oberseite der Grundplatte 37 erstrecken sich, parallel zu den kurzen Seitenwänden 39 und 41, zwei gerade erhabene Leisten 43 und 44, die parallel zueinander liegende und nach oben zeigende ebene Auflageflächen 46 bzw. 47 bilden.

Nach innen zu begrenzen die beiden Leisten 43 und 44 eine Nut, innerhalb derer sich eine halbzylindrisch gekrümmte Wand 48 über die Leisten 43, 44 erhebt. Die offene Seite der halbzylindrischen Wand zeigt zu der Grundplatte 37. Die halbzylindrische Wand 47 ist mittig zwischen den beiden Leisten 46 und 47 angeordnet und ihre Längsachse steht senkrecht auf den Flächen, die die langen Seitenflächen 42 der Grundplatte 37 enthalten.

Konzentrisch zu der äußeren halbzylindrischen Wand 47 ist eine radial innen liegende halbzylindrische Wand 49 ausgebildet, die konzentrisch zu der äußeren halbzylindrischen Wand 48 verläuft. Ihre Rotationsachse fällt mit der Rotationsachse der äußeren halbzylindrischen Wand 48 zusammen. Beide halbzylinderische Wände 48 und 49 erstrecken sich über die gesamte Breite der Bodenplatte 37.

Zwei ebene Wände 51 und 52 verbinden die innere halbzylindrische Wand 47 mit der äußeren halbzylindrischen Wand 48. Die beiden Wände 51 und 52 liegen etwa auf Radien, die von der Rotationsachse der beiden halbzylindrischen Wände 48, 49 ausgehen. Sie schließen miteinander einen Winkel von ca. 60° ein. Bei einer alternativen Ausführungsform können die beiden ebenen Wände 51 und 52 auf von der Scheitellinie der inneren halbzylindrischen Wand 49 ausgehen. In jedem Falle entstehen hierdurch insgesamt vier durchgehende Kanäle 53, 54, 55 und 56. Der Kanal 56 weist einen Halbkreisquerschnitt auf. Die beiden Kanäle 53 und 54 einen Querschnitt entsprechend einem Sektor eines Kreisrings. Der Kanal 54, je nach Gestaltung, entweder einen Querschnitt entsprechend einem Sektor eines Kreisrings oder einem Sektor eines Kreises. Sämtliche Kanäle 53 ... 56 ändern ihren Querschnitt über die Länge gesehen nicht. Sämtliche Kanäle 53 ... 56 sind in beiden Richtungen offen.

Der Elastomerkörper, der die Anschlagbremseinrichtung 36 bildet, steckt, wie Fig. 2 zeigt, auf der Winkelkonsole 37. Die teilzylindrische Wand 48 zeigt mit ihrer Außenseite nach oben in Richtung auf die langen Arme 17, 21 der beiden Schwenkhebel 15, 16. Die Längsachse der halbzylindrischen Wand 48 liegt parallel zu den Achsen der Lagerzapfen 19, 23 und damit senkrecht zu der Längsachse der Wickelwelle 8. Die Achsen der Kanäle 53 ... 56 liegen parallel zu den Lagerzapfen 19 und 23.

Mit Hilfe der gezeigten Anschlagbremseinrichtung ist es möglich, eine gezielte Verlangsamung bei der Bewegung der beiden Schwenkhebel 15, 16 zu erreichen, wenn sie sich der eingefahrenen Endstellung nähern. Insbesondere ist es mit der gezeigten Gestaltung möglich, eine progressive Bremskraft zu erzeugen. Diese Verzögerung geschieht ohne dass in besonderer Weise auf dem Stromverlauf eingewirkt werden muss, den der Motor bei der Einfahrbewegung zieht.

Im Einzelnen sieht die Verformung etwa wie folgt aus. Die beiden langen Arme 17, 21 legen sich, jeder für sich, auf der Außenseite der halbzylindrischen Wand 48 an voneinander beabstandeten Punkten auf. Die Punkte sind sowohl in Achsrichtung als auch in Umfangsrichtung der halbzylindrischen Wand 48 voneinander entfernt. Sie liegen etwa an jenen Stellen, an denen die beiden geraden Stütz- oder Trennwände 51, 52 in die äußere halbzylindrische Wand 48 einmünden.

Während der Bewegung erfährt die halbzylindrische Wand 48 eine zunehmende Verformung, die zu einer Verformung der Wände 51 und 52 wird, wodurch schließlich auch die halbhalbzylindrische Wand 49 verformt wird. Bei der Bewegung werden ersichtlicherweise zunehmend mehr Bereiche der Anschlagbremseinrichtung verformt, womit die erforderliche Verformungskraft progressiv ansteigt, was den Motor entsprechend verlangsamt, da ihm zusätzliche Leistung abgefordert wird.

Am Schluss der Bewegung treffen die langen Arme 17, 21 schließlich auf die kaum noch verformbaren Oberseiten 46, 47 der beiden Leisten 43 und 44 auf, womit die Endstellung für die beiden Schwenkhebel 15, 16 erreicht ist.

Zufolge der abnehmenden Bewegungsgeschwindigkeit stehen beim Erreichen der Endstellung, die der eingefahrenen Position entspricht, keine hörbaren Geräusche.

Bei der Ausführungsform gemäß Fig. 2 wird für beide Schwenkhebel 15, 16 eine einzige Anschlagbremseinrichtung 36 verwendet. Es leuchtet jedoch ohne Weiteres ein, dass auch zwei getrennte Anschlagbremseinrichtungen 36 eingesetzt werden können, bei denen, jede für sich, mit einer Flanke des Schwenkhebels 15, 16 zusammenwirkt, wie dies Fig. 2 erkennen lässt.

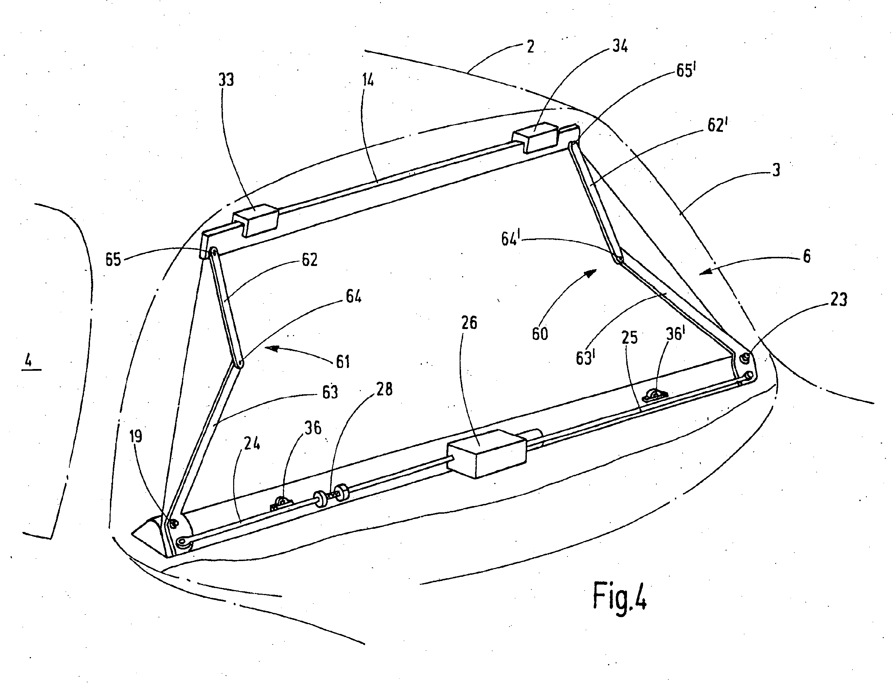

Die erfindungsgemäße Anschlagbremseinrichtung 36 ist in ihrer Anwendung nicht auf Heckscheibenrollos 6 beschränkt, die starre Schwenkhebel verwenden. Vielmehr ist die Anwendung auch möglich bei Heckscheibenrollos 6, die, wie Fig. 4 zeigt, zwei Kniehebelanordnungen 60 und 61 verwenden.

Jede Kniehebelanordnung 60, 61 setzt sich aus einem oberen und einem unteren Kniehebelarm 62 bzw. 63 zusammen. Die beiden Kniehebelarme 62, 63 sind durch ein scharnierartiges Kniegelenkt 64 miteinander verbunden. Der untere Kniehebelarm 23 ist ähnlich ausgestaltet, wie der Schwenkarm 15, lediglich mit dem Unterschied, dass der lange Arm deutlich verkürzt ist. Von dem Kniegelenk 64 führt der obere Kniehebelarm 62 zu dem Zugstab 14, der in der Nähe des äußeren Endes bei 65 an dem Zugstab 14 anscharniert ist. Die Achse des scharnierartigen Kniegelenks 64 liegt parallel zu der Schwenkachse, gebildet durch den Lagerbolzen 19, sowie parallel zu der Schwenkachse an der Stelle 65, wo der obere Kniehebelarm 62 anscharniert ist.

Der Aufbau der Kniehebelanordnung 60 ist in sinngemäß in der gleichen Weise gestaltet. Eine weitere Erläuterung erübrigt sich. Die dort vorhandenen Teile sind mit demselben Bezugszeichen ergänzt durch einen Apostroph beschriftet.

Da bei der Ausführungsform nach Fig. 4 sich die beiden Kniehebelanordnungen 60 und 61 auch im eingefahrenen Zustand in keiner Stelle überdecken, ist für jeden unteren Kniehebelarm 63 ein eigener Anschlagbremseinrichtung 36 bzw. 36' vorgesehen. Sie befinden sich an jener Stelle auf der nach hinten zeigenden Seitenwand 12, die bei eingefalteten Kniehebelarmanordnungen 60, 61 in der Nähe von leeren Kniegelenken 64 bzw. 64' liegt.

Die gezeigte Anschlagbremseinrichtung in Gestalt des einstückig gespritzten Elastomerteils ist sehr kostengünstig.

Ein Hebelrollo für Kraftfahrzeuge ist mit einer Anschlagbremseinrichtung versehen. Die Anschlagbremseinrichtung soll dazu führen die Bewegung der Hebel beim Einfahren in der Nähe der Endlagen zu verzögern, so dass laute Aufschlaggeräusche vermieden werden.

## Patentansprüche

1. Heckfensterrollo (6) für Kraftfahrzeuge,
mit einer drehbar gelagerten Wickelwelle (8),
mit einer Rollobahn (13), die mit einer Kante an der Wickelwelle (8) und mit einer anderen Kante an einem Zugstab (14) befestigt ist,
mit einer Vorspanneinrichtung (9), die derart angeordnet ist, dass die Rollobahn (13) auf Spannung gehalten ist,
mit zwei biegesteifen Schwenkhebelanordnungen (15, 16; 60, 61), die neben der Wickelwelle (8) gelagert sind, wobei die Schwenkachse rechtwinkelig zu der Achse der Wickelwelle (8) verläuft, und die mit dem Zugstab (14) verbunden sind,
mit wenigstens einer Anschlagbremseinrichtung (36), die derart im Bewegungsweg der Schwenkhebelanordnungen (15, 16; 60, 61) angeordnet und gestaltet ist, dass sie die Bewegung der Schwenkhebelanordnungen (15, 16; 60, 61) bei der Bewegung in die Ruhelage, die der eingefahrenen Rollobahn (13) entspricht, verlangsamen, und
mit einer elektrischen Antriebseinrichtung (26), die dazu eingerichtet ist, die Rollobahn (13) wenigstens in einer ihrer Bewegungsrichtungen aktiv zu bewegen,
wobei die Anschlagbremseinrichtung (36) von einem elastischen Teil gebildet ist, **dadurch gekennzeichnet, dass** das elastische Teil ein Elastomerteil ist, das mehrere achsparallel zueinander verlaufende Durchgangskanäle (53 ... 56) enthält,
dass das Elastomerteil (36) zwei konzentrisch zueinander verlaufende halbzylindrische oder halbelliptische Wände (48, 49) aufweist, die in radialer Richtung voneinander beabstandet sind,
und dass die halbzylindrischen Wände (48, 49) durch zwei stegförmig verlaufende ebene Wände (51, 52) miteinander verbunden sind, die zumindest angenähert in radialer Richtung verlaufen.

2. Heckfensterrollo nach Anspruch 1, **dadurch gekennzeichnet, dass** lediglich eine einzige Anschlagbremseinrichtung (36) für beide Schwenkhebel- anordnungen (15, 16; 60, 61) vorgesehen ist.

3. Heckfensterrollo nach Anspruch 1, **dadurch gekennzeichnet, dass** für jede Schwenkhebelanordnung (15, 16; 60, 61) eine eigene Anschlagbremseinrichtung (36) vorgesehen ist.

4. Heckfensterrollo nach Anspruch 1, **dadurch gekennzeichnet, dass** die Anschlagbremseinrichtung (36) eine progressive Charakteristik aufweist derart, dass mit zunehmender Verformung die erforderliche Verformungskraft überproportional zum Weg ansteigt.

5. Heckfensterrollo nach Anspruch 1, **dadurch gekennzeichnet, dass** das Elastomerteil (36) einstückig ist.

6. Heckfensterrollo nach Anspruch 1, **dadurch gekennzeichnet, dass** die Rollobahn (8) einen Zuschnitt aufweist, der die Form des Heckfensters (36) annähert.

7. Heckfensterrollo nach Anspruch 1, **dadurch gekennzeichnet, dass** die Vorspanneinrichtung (9) mit der Wickelwelle gekuppelt ist.

8. Heckfensterrollo nach Anspruch 1, **dadurch gekennzeichnet, dass** die Vorspanneinrichtung (9) von einem Federmotor gebildet ist.

9. Heckfensterrollo nach Anspruch 1, **dadurch gekennzeichnet, dass** jede Schwenkhebelanordnung (15, 16; 60, 61) von einem starren hindurchgehenden Hebel gebildet ist, der einends in der Nähe der Wickelwelle (8) um eine rechtwinklig zu der Wickelwelle (8) verlaufende Achse (19, 23) gelagert ist und dessen anderes Ende mit dem Zugstab (14) gleitend verbunden ist.

10. Heckfensterrollo nach Anspruch 1, **dadurch gekennzeichnet, dass** jede Schwenkhebelanordnung (15, 16; 60, 61) von einer Kniehebelanordnung gebildet ist, die einends bei der Wickelwelle (8) um eine Achse (19,23) schwenkbar gelagert ist, die rechtwinklig zu der Wickelwelle (8) verläuft und die anderenends über ein Scharniergelenk (65) mit dem Zugstab (14) verbunden ist, dessen Scharnierachse parallel zu der Achse (19, 23) verläuft, mit der die Kniehebelanordnung (60, 61) bei der Wickelwelle (8) schwenkbar gelagert ist.

11. Heckfensterrollo nach Anspruch 1, **dadurch gekennzeichnet, dass** die elektrische Antriebseinrichtung (26) wahlweise mit der Wickelwelle (8) oder der Schwenkhebelanordnung (15, 16; 60, 61) gekoppelt ist.

12. Heckfensterrollo nach Anspruch 1, **dadurch gekennzeichnet, dass** die elektrische Antriebseinrichtung (26) einen Getriebemotor umfasst.

## Claims

1. Rear window roller blind (6) for motor vehicles,
with a rotatably mounted winding shaft (8),
with a blind sheet (13), which is fastened to the winding shaft (8) at one edge and to a pull rod (14) at the other edge,
with a biasing device (9), which is arranged in such a manner that the blind sheet (13) is held at tension,
with two bend-resistant swivel lever arrangements (15, 16; 60, 61), which are mounted next to the winding shaft (8), the swivel axis running at right angles to the axis of the winding shaft (8), and which are connected to the pull rod (14),
with at least one stop brake device (36), which is arranged and configured in such a manner in the path of movement of the swivel lever arrangements (15, 16; 60, 61) that it slows down the movement of the swivel lever arrangements (15, 16; 60, 61) during movement into the resting position, which corresponds to the retracted blind sheet (13), and
with an electric drive device (26), which is arranged to actively move the blind sheet (13) at least in one of its directions of movement,
wherein the stop brake device (36) is formed from an elastic part, **characterised in that** the elastic part is an elastomeric part, which contains multiple passages (53 ... 56) running axis-parallel to one another,
that the elastomeric part (36) has two semi-cylindrical or hemi-ellipsoidal walls (48, 49) running concentrically to one another and spaced from one another in radial direction,
and that the semi-cylindrical walls (48, 49) are connected to another by means of two plane walls (51, 52) running in a web shape, which run at least approximately in radial direction.

2. Rear window roller blind according to claim 1, **characterised in that** only a single stop brake device (36) is provided to both swivel lever arrangements (15, 16; 60, 61).

3. Rear window roller blind according to claim 1, **characterised in that** each swivel lever arrangement (15, 16; 60, 61) is provided with its own stop brake device (36).

4. Rear window roller blind according to claim 1, **characterised in that** the stop brake device (36) has a progressive characteristic such that on increasing deformation the necessary deformation force increases super-proportionally to the path.

5. Rear window roller blind according to claim 1, **characterised in that** the elastomeric part (36) is in a single piece.

6. Rear window roller blind according to claim 1, **characterised in that** the blind sheet (8) has a blank, which is close to the shape of the rear window (36).

7. Rear window roller blind according to claim 1, **characterised in that** the biasing device (9) is coupled to the winding shaft.

8. Rear window roller blind according to claim 1, **characterised in that** the biasing device (9) is formed by a spring motor.

9. Rear window roller blind according to claim 1, **characterised in that** each swivel lever arrangement (15, 16; 60, 61) is formed by a rigid through lever, which at one end is mounted in the vicinity of the winding shaft (8) around an axis (19, 23) running at right angles to the winding shaft (8) and its other end is connected to the pull rod (14) in a sliding arrangement.

10. Rear window roller blind according to claim 1, **characterised in that** each swivel lever arrangement (15, 16; 60, 61) is formed by a bent lever arrangement, which at one end is mounted at the winding shaft (8) to swivel around an axis (19, 23), which runs at right angles to the winding shaft (8), and at the other end is connected by means of a hinge joint (65) to the pull rod (14), the hinge axis of which runs parallel to the axis (19, 23), at which the bent lever arrangement (60, 61) is mounted to swivel at the winding shaft (8).

11. Rear window roller blind according to claim 1, **characterised in that** the electric drive device (26) is selectively coupled to the winding shaft (8) or to the swivel lever arrangement (15, 16; 60, 61).

12. Rear window roller blind according to claim 1, **characterised in that** the electric drive device (26) is a geared motor.

## Revendications

1. Store enrouleur pour lunette arrière (6) destiné à des véhicules automobiles,
comprenant un axe d'enroulement (8) monté tournant,
comprenant une bande de store (13) qui est fixée par un bord à l'axe d'enroulement (8) et par un autre bord à une barre de traction (14),
comprenant un dispositif de précontrainte (9) qui est disposé de manière telle que la bande de store (13) soit maintenue sous tension,
comprenant deux systèmes de leviers pivotants (15, 16; 60, 61) rigides en flexion, qui sont montés à côté de l'axe d'enroulement (8), l'axe de pivotement s'étendant à angle droit par rapport à l'axe de l'axe d'enroulement (8), et qui sont reliés à la barre de traction (14),
comprenant au moins un dispositif de freinage à butée (36) qui est placé dans la trajectoire de mouvement des systèmes de leviers pivotants (15, 16; 60, 61) et agencé de manière telle qu'il ralentit le mouvement des systèmes de leviers pivotants (15, 16; 60, 61) lors du mouvement dans la position de repos qui correspond à la bande de store (13) rentrée, et
comprenant un dispositif d'entraînement (26) électrique qui est conçu pour déplacer la bande de store (13) activement au moins dans un de ses sens de déplacement,
le dispositif de freinage à butée (36) étant constitué d'une pièce élastique, **caractérisé en ce que** la pièce élastique est une pièce en élastomère qui contient plusieurs canaux de passage (53 à 56) dont les axes sont parallèles les uns aux autres,
que la pièce en élastomère (36) présente deux parois (48, 49) semi-cylindriques ou semi-elliptiques qui sont concentriques l'une à l'autre et espacées l'une de l'autre dans la direction radiale,
et que les parois semi-cylindriques (48, 49) sont reliées l'une à l'autre par deux parois (51, 52) planes en forme de cloisons qui s'étendent au moins approximativement dans la direction radiale.

2. Store enrouleur pour lunette arrière selon la revendication 1, **caractérisé en ce qu'**un seul dispositif de freinage à butée (36) est prévu pour les deux systèmes de leviers pivotants (15, 16; 60, 61).

3. Store enrouleur pour lunette arrière selon la revendication 1, **caractérisé en ce qu'**un dispositif de freinage à butée (36) séparé est prévu pour chaque système de levier pivotant (15, 16; 60, 61).

4. Store enrouleur pour lunette arrière selon la revendication 1, **caractérisé en ce que** le dispositif de freinage à butée (36) présente une caractéristique progressive, de telle sorte qu'à mesure que la déformation augmente, la force de déformation nécessaire augmente de façon surproportionnelle par rapport au trajet.

5. Store enrouleur pour lunette arrière selon la revendication 1, **caractérisé en ce que** la pièce en élastomère (36) est réalisée d'un seul tenant.

6. Store enrouleur pour lunette arrière selon la revendication 1, **caractérisé en ce que** la bande de store (13) présente une coupe qui s'approche de la forme de la lunette arrière (36).

7. Store enrouleur pour lunette arrière selon la revendication 1, **caractérisé en ce que** le dispositif de précontrainte (9) est accouplé à l'axe d'enroulement.

8. Store enrouleur pour lunette arrière selon la revendication 1, **caractérisé en ce que** le dispositif de précontrainte (9) est constitué d'un moteur à ressort.

9. Store enrouleur pour lunette arrière selon la revendication 1, **caractérisé en ce que** chaque système de levier pivotant (15, 16; 60, 61) est constitué d'un levier continu rigide, qui est monté par une extrémité à proximité de l'axe d'enroulement (8), autour d'un axe (19, 23) s'étendant à angle droit par rapport à l'axe d'enroulement (8), et dont l'autre extrémité est reliée de façon coulissante à la barre de traction (14).

10. Store enrouleur pour lunette arrière selon la revendication 1, **caractérisé en ce que** chaque système de levier pivotant (15, 16; 60, 61) est constitué d'un système de levier à genouillère qui est monté par une extrémité, à proximité de l'axe d'enroulement (8), de façon pivotante autour d'un axe (19, 23) qui s'étend à angle droit par rapport à l'axe d'enroulement (8), et qui est relié par l'autre extrémité à la barre de traction (14), par l'intermédiaire d'une articulation à charnière (65) dont l'axe de charnière est parallèle à l'axe (19, 23) avec lequel le système de levier à genouillère (60, 61) est monté pivotant près de l'axe d'enroulement (8).

11. Store enrouleur pour lunette arrière selon la revendication 1, **caractérisé en ce que** le dispositif d'entraînement (26) électrique est accouplé au choix à l'axe d'enroulement (8) ou au système de levier pivotant (15, 16; 60, 61).

12. Store enrouleur pour lunette arrière selon la revendication 1, **caractérisé en ce que** le dispositif d'entraînement (26) électrique comprend un motoréducteur.
